# EUROPÄISCHE PATENTSCHRIFT

(11) **EP 4 222 040 B1**
(45) Veröffentlichungstag und Bekanntmachung des Hinweises auf die Patenterteilung: **15.01.2025**
(21) Anmeldenummer: 21743123.8
(22) Anmeldetag: 08.07.2021
(51) Int. Cl.: B62B 3/18, B62B 5/00, F16B 2/22, F16B 7/04, F16B 21/07

(54) **EINKAUFSWAGEN**
SHOPPING TROLLEY
CHARIOT DE COURSES

(30) Priorität: 01.10.2020 DE 102020125733
(43) Veröffentlichungstag der Anmeldung: 09.08.2023
(73) Patentinhaber: Wanzl GmbH & Co. KGaA, 89340 Leipheim (DE)
(72) Erfinder: ACIKGÖZ, Ayhan, 89312 Günzburg (DE); EICHELE, Hermann, 89340 Leipheim (DE); DAMINGER, Johann, 89223 Neu-Ulm, Burlafingen (DE)
(86) Internationale Anmeldenummer: PCT/EP2021/068932
(87) Internationale Veröffentlichungsnummer: WO 2022/069090

(56) Entgegenhaltungen:
- EP-A1- 0 411 316
- EP-A1- 0 842 838
- CN-Y- 201 427 598
- DE-U1- 202012 102 078
- KR-B1- 100 883 182

## Beschreibung

Die vorliegende Erfindung betrifft einen Scharnierdämpfer für eine Korbklappe oder einen Kindersitz eines Einkaufswagens, ein Verfahren zur Montage der Korbklappe oder des Kindersitzes an dem Einkaufswagen, ein System zum Verbinden eines gebogenen Drahts mit einer Stange eines Einkaufswagens und einen Einkaufswagen. Im Stand der Technik ist beispielsweise aus der EP 0842838 A1 bekannt, ein Drahtende derart zu biegen, dass es eine Stange eines Einkaufswagens umgreifen kann. Hierdurch können bewegliche Teile an dem Einkaufswagen angeordnet werden. Typischerweise wird zwischen dem gebogenen Draht und der Stange ein Scharnier, vorzugsweise aus Kunststoff, montiert.

Die CN 2014 27598 Y beschreibt eine Drehhülse für einen Einkaufswagen, um die herum ein Draht gebogen wird, um eine schwenkbare Vorrichtung an einem Einkaufswagen anordnen zu können.

Weitere Vorrichtungen zum Verbinden eines gebogenen Drahts mit einer Stange an einem Einkaufswagen sind in der EP 0411316 A1, in der KR 100883182 B1 und in der DE 202012102078 U1 gezeigt.

An einem Einkaufswagen können unterschiedliche klappbare Vorrichtungen vorgesehen sein. Insbesondere kann an einem Einkaufswagen eine Korbklappe oder eine Kindersitzklappe angeordnet sein, die bei Nichtgebrauch zusammengeklappt werden kann. Hierdurch kann Stauraum für einzukaufende Waren zur Verfügung gestellt werden kann.

Beispielsweise können zwei Drähte um eine Stange eines Einkaufswagens gebogen werden, sodass der Draht die Stange umgreift. An dem Draht kann die Korbklappe bzw. der Kindersitz angeordnet werden. Die Korbklappe bzw. der Kindersitz können dadurch verschwenkt werden. Der Draht wird mit einer Biegevorrichtung gebogen, wobei vor dem Biegevorgang ein Scharnierdämpfer aus Kunststoff zwischen der Stange und dem Draht angeordnet wird.

Die Drehhülse der CN 2014 27598 Y beschreibt keinen Bund, der einen gebogenen Draht umgreift. Vielmehr wird der Draht um die Drehhülse gebogen, was nur direkt am Einkaufswagen vorgenommen werden kann.

Nachteilig hierbei ist, dass der endbearbeitete Draht durch den Biegevorgang verkratzt werden kann. Außerdem stellt der Biegevorgang einen aufwändigen und schwierigen Arbeitsschritt dar, da die jeweilige zu verschwenkende Vorrichtung direkt an dem Einkaufswagen montiert werden muss.

Eine Aufgabe der Erfindung ist daher, ein Verfahren, eine Vorrichtung, ein System und einen Einkaufswagen zur Verfügung zu stellen, sodass eine schnelle, kostengünstige Anordnung einer zu verschwenkenden Vorrichtung an einem Einkaufswagen angeordnet werden kann, wobei eine Beschädigung des zu biegenden Drahtes ausgeschlossen wird.

Die Lösung dieser Aufgabe erfolgt erfindungsgemäß durch die in den Ansprüchen definierten Merkmale.

Als erster Aspekt der Erfindung wird eine Vorrichtung zum Verbinden eines gebogenen Drahts mit einer Stange an einem Einkaufswagen zur Verfügung gestellt, wodurch eine Klappvorrichtung, insbesondere eine Korbklappe oder ein Kindersitz, die an dem gebogenen Draht angeordnet ist, klappbar an dem Einkaufswagen angeordnet wird, umfassend: einen Bund zur Aufnahme des gebogenen Drahts und eine Ausnehmung zur Aufnahme der Stange, wodurch die Klappvorrichtung verschwenkbar um die Stange ausgebildet ist.

Durch die erfindungsgemäße Vorrichtung kann ein Einclipsen der Korbklappe bzw. des Kindersitzes an einem Einkaufswagen ermöglicht werden. Es ist daher nicht mehr erforderlich, dass ein Draht gebogen wird, um eine klappbare Einheit an dem Einkaufswagen anzuordnen. Es entfällt daher zusätzlich die Gefahr, dass der betreffende Draht beim Biegen beschädigt wird.

Als zweiter Aspekt der Erfindung wird ein Verfahren zum Befestigen einer Klappvorrichtung, insbesondere einer Korbklappe oder eines Kindersitzes, an einem Einkaufswagen zur Verfügung gestellt, umfassend: einen gebogenen Draht an dem die Klappvorrichtung angeordnet ist, eine Stange des Einkaufswagens, um den die Klappvorrichtung verschwenkt werden kann, und eine Vorrichtung nach einem der Ansprüche 1 bis 6, umfassend die Schritte: loses Einhängen des gebogenen Drahts in die Stange, Einclipsen der Vorrichtung und Verfahren der Vorrichtung entlang der Stange bis die Vorrichtung zwischen dem gebogenen Draht und der Stange angeordnet ist.

Als dritter Aspekt der Erfindung wird ein System zum Verbinden eines gebogenen Drahts mit einer Stange eines Einkaufswagens zur Verfügung gestellt, wodurch eine Klappvorrichtung, insbesondere eine Korbklappe oder ein Kindersitz, an dem Einkaufswagen klappbar angeordnet werden kann, umfassend: den gebogenen Draht, an dem die Klappvorrichtung angeordnet ist, und die Stange, um die die Klappvorrichtung verschwenkbar ausgebildet ist, wobei zwischen dem gebogenen Draht und der Stange eine Vorrichtung nach einem der Ansprüche 1 bis 6 angeordnet ist.

Als vierter Aspekt der Erfindung wird ein Einkaufswagen zur Verwendung in einem Einkaufsladen oder Supermarkt zur Verfügung gestellt, umfassend eine Vorrichtung nach einem der Ansprüche 1 bis 6 oder ein System nach Anspruch 8.

Beispielhafte Ausführungsformen werden in den abhängigen Ansprüchen beschrieben.

Gemäß einer außerdem beispielhaften Ausführungsform der Erfindung wird eine Vorrichtung zur Verfügung gestellt, wobei die Vorrichtung aus einem Kunststoff, insbesondere Polypropylen (PP), Polyamid (PA) oder PE (Polyethylen) besteht. Die Vorrichtung kann insbesondere in einem Spritzgussverfahren hergestellt werden.

In einer noch weiteren erfindungsgemäßen Ausführungsform wird eine Vorrichtung zur Verfügung gestellt, wobei der Bund eine Aussparung aufweist oder wobei der Bund geschlossen entlang seines radialen Umfangs ausgebildet ist.

Ist der Bund nicht geteilt, sondern geschlossen entlang seines radialen Umfangs ausgebildet, so kann eine Verletzungsgefahr durch Aussparungen, in die insbesondere Kinder ihre Finger einführen könnten, ausgeschlossen werden. Weist der Bund Aussparungen auf, sodass der Bund entlang seines radialen Umfangs unterbrochen ist, so kann mechanisch stabileres Material verwendet werden, da es sich bei der Ausweitung des Spalts zur Aufnahme der Stange in die Ausnehmung, nicht stauchen lassen muss. Vorteilhafterweise kann in diesem Fall ein haltbares Material verwendet werden, das gut geeignet ist, den Witterungseinflüssen unter freiem Himmel Stand zu halten.

Gemäß einer beispielhaften Ausführungsform der Erfindung wird eine Vorrichtung zur Verfügung gestellt, wobei die Vorrichtung eine Rastnase zum Zurückhalten des aufgenommenen gebogenen Drahts aufweist. Durch eine Rastnase kann dem aufgenommenen gebogenen Draht in der Vorrichtung ein besserer Halt ermöglicht werden.

In einer weiteren erfindungsgemäßen Ausführungsform wird eine Vorrichtung zur Verfügung gestellt, wobei die Vorrichtung einen Spalt zur Ausnehmung aufweist. Der Spalt kann aufgeweitet werden und so der Stange ein Kanal eröffnet werden, um in die Ausnehmung zu gelangen

Gemäß einem weiteren Ausführungsbeispiel der vorliegenden Erfindung wird eine Vorrichtung zur Verfügung gestellt, wobei der Bund den gebogenen Draht zumindest teilweise umgreift. Durch ein Umgreifen wird dem gebogenen Draht innerhalb der Vorrichtung ein mechanisch stabiler Halt ermöglicht.

Als eine Idee der Erfindung kann angesehen werden, einen Scharnierdämpfer zur Verfügung zu stellen, der eine Verbindung zwischen einem gebogenen Draht und einer Stange eines Einkaufswagens derart herstellen kann, dass der Draht um die Stange verschwenkt werden kann. Die Montage kann dadurch erfolgen, dass ein vorgebogener Draht in eine Stange eingefädelt wird, der Scharnierdämpfer auf die Stange eingeclipst wird und durch Verfahren, also Bewegen, entlang der Achse der Stange hin zu dem gebogenen Draht zwischen dem gebogenen Draht und der Stange angeordnet wird, sodass der Scharnierdämpfer seine Funktion als Scharnier zwischen dem gebogenen Draht und der Stange ausüben kann.

Weitere Einzelheiten und Vorteile der Erfindung werden anhand der in den Zeichnungen dargestellten Ausführungsbeispiele deutlich. Es zeigen
- Fig. 1: eine erfindungsgemäße erste Vorrichtung 1 mit einer Ausnehmung 3 zur Aufnahme einer Stange,
- Fig. 2: dieselbe erfindungsgemäße Vorrichtung 1 mit dem Bund 2 zum Umgreifen des gebogenen Drahts,
- Fig. 3: dieselbe erfindungsgemäße Vorrichtung 1 in einer Seitenansicht mit dem Bund 2,
- Fig. 4: dieselbe erfindungsgemäße Vorrichtung 1 in einer Ansicht von oben mit dem unterbrochenen Bund 2,
- Fig. 5: dieselbe erfindungsgemäße Vorrichtung 1 in einem Längsschnitt mit der Ausnehmung 8, in die der gebogene Draht eingeführt werden kann und Rastnasen 9, die ein Herausfallen des gebogenen Drahts aus der Ausnehmung 8 verhindern,
- Fig. 6: dieselbe erfindungsgemäße Vorrichtung 1 in einer perspektivischen Darstellung,
- Fig. 7: dieselbe erfindungsgemäße Vorrichtung 1 im montierten Zustand, wobei der Scharnierdämpfer 1 den gebogenen Draht 10 und die Stange 5 aufgenommen hat,
- Fig. 8: eine zweite Ausführungsform eines Scharnierdämpfers 6 mit einem zweigeteilten Bund 2,
- Fig. 9: dieselbe zweite Ausführungsform eines Scharnierdämpfers 6 in einer seitlichen Ansicht,
- Fig. 10: dieselbe zweite Ausführungsform eines Scharnierdämpfers 6 in einer Draufsicht,
- Fig. 11: der Scharnierdämpfer 6 in einer perspektivischen Ansicht,
- Fig. 12: eine dritte Ausführungsform eines Scharnierdämpfers 7 mit einem geschlossenen Bund 12,
- Fig. 13: der Scharnierdämpfer 7 in einer seitlichen Ansicht,
- Fig. 14: der Scharnierdämpfer 7 in einer Draufsicht,
- Fig. 15: der Scharnierdämpfer 7 in einer perspektivischen Ansicht.

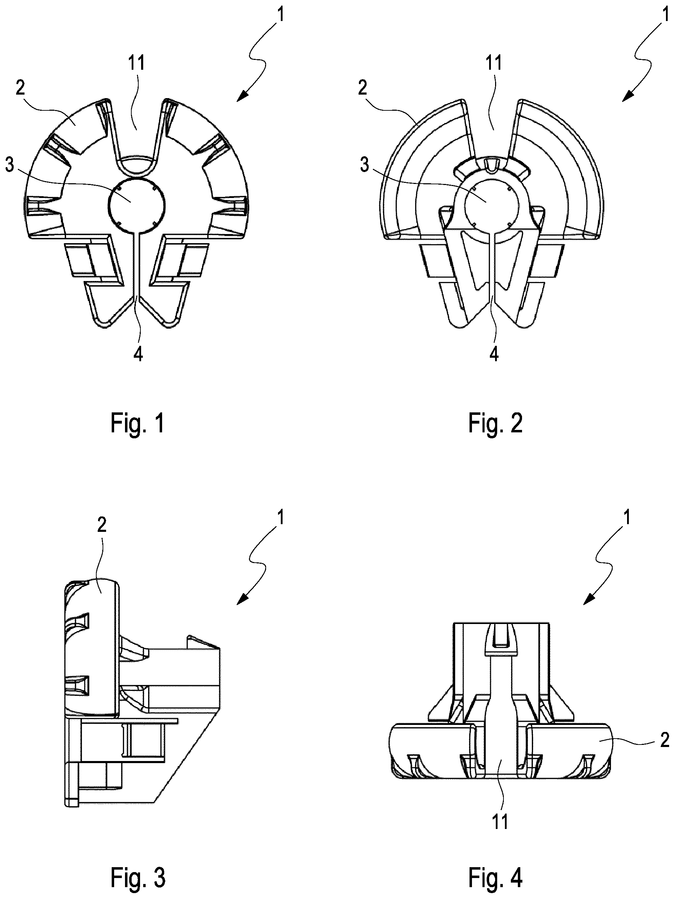

Fig. 1 zeigt einen Scharnierdämpfer 1 in einer vorderen Ansicht, der entlang des Spalts 4 aufgeweitet werden kann, sodass der Scharnierdämpfer 1 auf eine Stange eines Einkaufswagens aufgeclipst werden kann, wobei die Stange durch die Aufnahme 3 aufgenommen werden kann.

Fig. 2 zeigt denselben Scharnierdämpfer 1 in einer Rückansicht mit dem Bund 2, der den gebogenen Draht umgreift, wodurch eine bessere Zentrierung des Scharnierdämpfers 1 ermöglicht wird. Außerdem kann durch den Bund 2 verhindert werden, dass Kinder ihre Finger zwischen die Stange und den gebogenen Draht bekommen, da durch den Bund 2 eine Abdeckung sichergestellt wird.

Fig. 3 zeigt denselben Scharnierdämpfer 1 in einer Seitenansicht mit dem Bund 2.

Fig. 4 zeigt denselben Scharnierdämpfer 1 in einer Ansicht von oben.

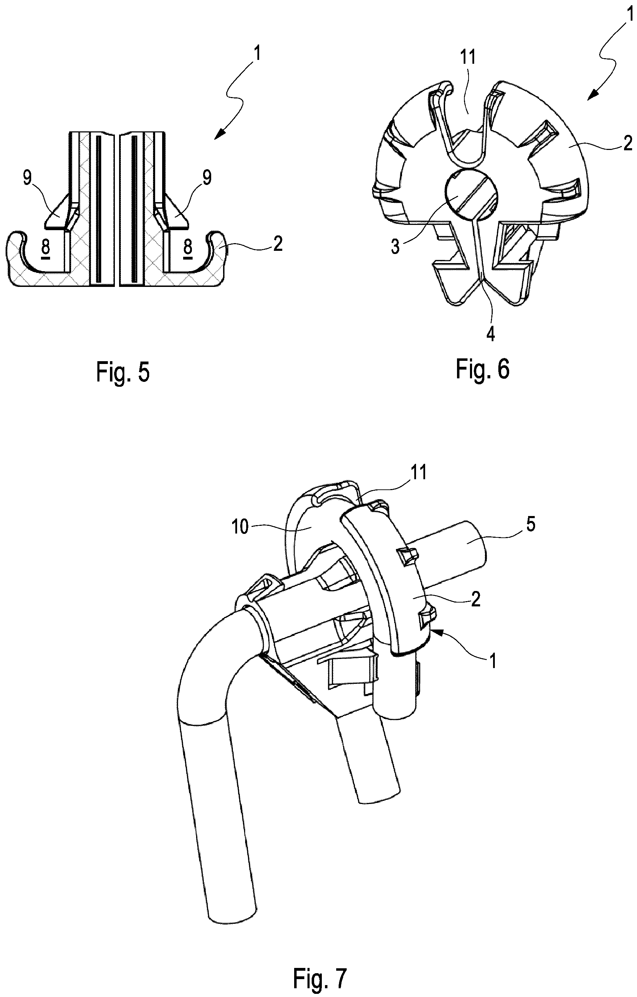

Fig. 5 zeigt denselben Scharnierdämpfer 1 in einer Längsschnittdarstellung mit der Ausnehmung 8, die zur Aufnahme des gebogenen Drahts vorgesehen ist. Der Bund 2 umgreift im montierten Zustand den gebogenen Draht. Außerdem kann der Scharnierdämpfer 1 zusätzlich Rastnasen 9 aufweisen, die ein Herausfallen eines aufgenommenen Drahts verhindern können.

Fig. 6 zeigt den Scharnierdämpfer 1 in einer perspektivischen Darstellung mit der Ausnehmung 3 zur Aufnahme einer Stange eines Einkaufswagens und dem Bund 2 zum Umgreifen eines gebogenen Drahts.

Fig. 7 zeigt den Scharnierdämpfer 1 im montierten Zustand, wobei der Scharnierdämpfer 1 einen gebogenen Draht 10 und eine Stange 5 aufgenommen hat, sodass eine Einheit, die an dem gebogenen Draht befestigt ist, um die Achse der Stange 5 des Einkaufswagens verschwenkt werden kann. Eine entsprechende Einheit kann eine Korbklappe oder eine Kindersitzklappe sein, wobei die Korbklappe oder die Kindersitzklappe durch den Scharnierdämpfer auf- bzw. zuklappbar ausgebildet sein können.

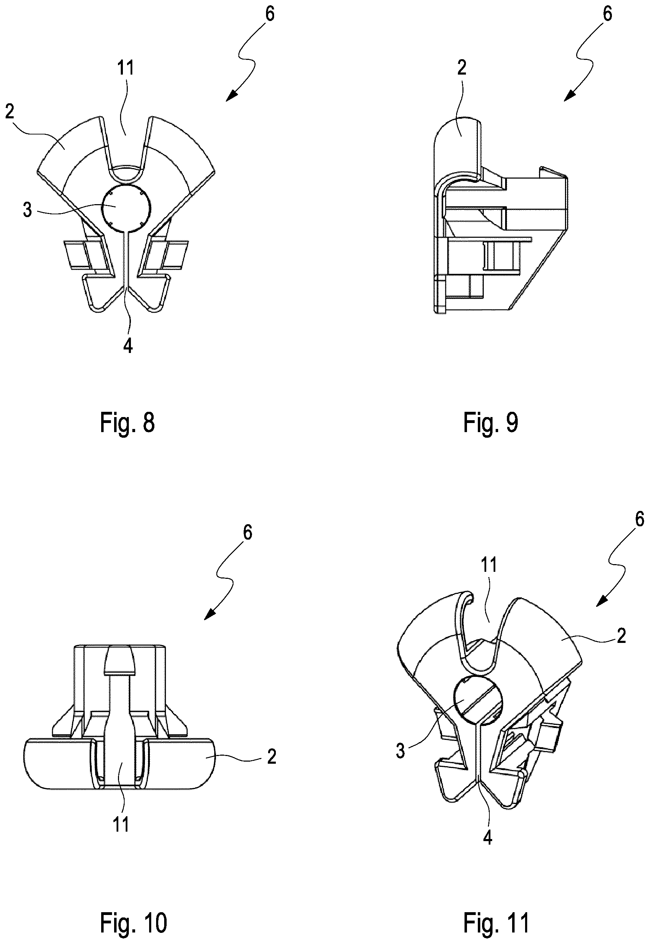

Fig. 8 zeigt eine zweite Ausführungsform eines erfindungsgemäßen Scharnierdämpfers 6, der sich durch einen zweigeteilten Bund 2 auszeichnet, wobei der Bund 2 nicht einen halben Umfang, wie bei der Ausführungsform 1 der Fig. 1 bis 7, sondern einen kleineren Umfang abdeckt. Außerdem weist der Scharnierdämpfer 6 einen Spalt 4 auf, wodurch der Scharnierdämpfer 6 aufgedehnt werden kann, sodass eine Stange eines Einkaufswagens in die Ausnehmung 3 eingeführt werden kann.

Fig. 9 zeigt den Scharnierdämpfer 6 in einer seitlichen Darstellung.

Fig. 10 zeigt denselben Scharnierdämpfer 6 in einer Draufsicht.

Fig. 11 zeigt denselben Scharnierdämpfer 6 in einer perspektivischen Darstellung mit der Ausnehmung 3 zur Aufnahme einer Stange eines Einkaufswagens, wobei der Scharnierdämpfer 6 derart flexibel ist, dass der Spalt 4 soweit aufgedehnt werden kann, dass die Stange in die Ausnehmung 3 eingeführt werden kann. Außerdem weist der Scharnierdämpfer 6 einen Bund 2 auf, der zweigeteilt ist, das heißt der Bund 2 weist eine Aussparung 11 auf. Durch diese Aussparung 11 wird das Ausdehnen des Spalts 4 bei dem Einführen einer Stange in die Ausnehmung 3 erleichtert. Durch die Aussparung 11 wird ermöglicht, dass die beiden Teile des Bunds 2 sich ohne Widerstand aufeinander zu bewegen können, wenn der Spalt 4 aufgeweitet wird.

Vorteilhaft bei der ersten und der zweiten Ausführungsform des Scharnierdämpfers 1 und 6 ist, dass das Material des Scharnierdämpfers 1, 6 nicht besonders weich oder elastisch sein muss, da keine Stauchung des Materials des Bunds 2 erfolgen muss, wenn der Spalt 4 aufgeweitet wird, um eine Stange in die Ausnehmung 3 zu führen.

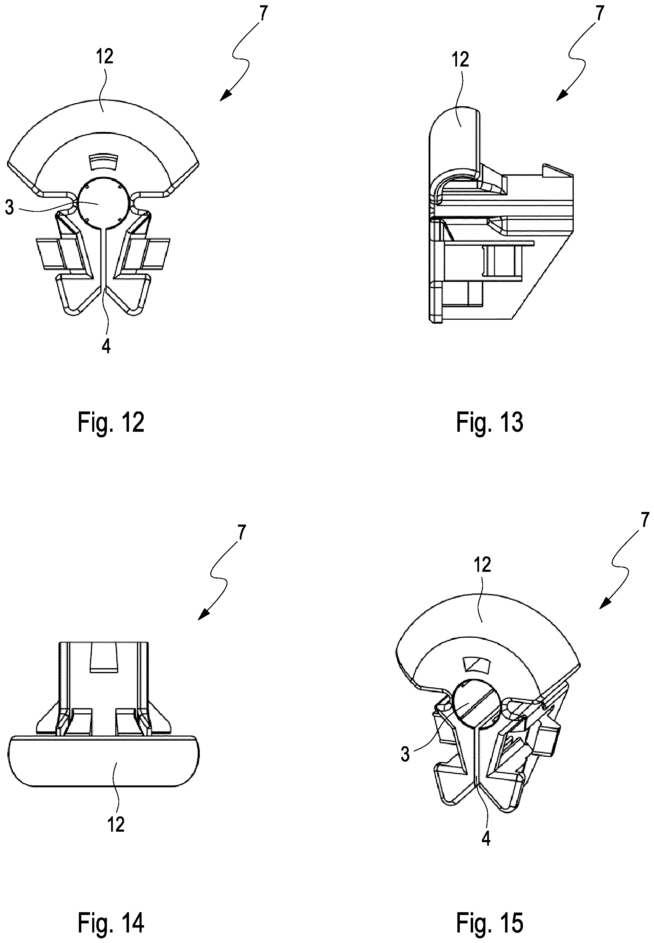

Fig. 12 zeigt eine dritte Ausführungsform eines erfindungsgemäßen Scharnierdämpfers 7, wobei der Bund 12 keine Aussparung 11 aufweist. Beim Aufweiten des Spalts 4 wird daher der Bund 12, der gegenüber des Spalts 4 liegt, zusammengestaucht, um eine ausreichende Öffnung für das Durchführen einer Stange zur Ausnehmung 3 zu eröffnen. Bei der dritten Ausführungsform des Scharnierdämpfers 7 handelt es sich daher um einen Scharnierdämpfer 7 mit einem Bund 2, der aus einem weichen bzw. elastischen Material besteht.

Fig. 13 zeigt denselben Scharnierdämpfer 7 mit dem Bund 12, wobei der Bund 12 keine Aussparung 11 wie in der ersten oder der zweiten Ausführungsform 1 und 6 der Figuren 1 bis 11 aufweist. Der Bund 12 dient dem teilweisen Umgreifen eines gebogenen Drahtes und ermöglicht damit die lösbare Verbindung einer Vorrichtung, die an dem gebogenen Draht angeordnet ist, und einem Einkaufswagen, da in die Ausnehmung 3 eine Stange eines Einkaufswagens aufgenommen werden kann. Durch den Scharnierdämpfer 7 wird ermöglicht, dass die Vorrichtung bezüglich des Einkaufswagens verschwenkt werden kann. Die Vorrichtung kann eine Korbklappe oder ein Kindersitz sein.

Fig. 14 zeigt denselben Scharnierdämpfer 7 mit dem radial durchgängigen Bund 12.

Fig. 15 zeigt in einer perspektivischen Darstellung den Scharnierdämpfer 7 mit dem durchgängen Bund 12, was bedeutet, dass der Bund 12 keine Aussparung 11 aufweist.

Vorteilhaft bei der dritten Ausführungsform des Scharnierdämpfers 7 ist, dass Spalten oder Öffnungen durch Aussparungen 11 des Bundes 7 vermieden werden, wodurch eine Verletzungsgefahr insbesondere für Kinder, die ihre Finger in Spalten einführen könnten, ausgeschlossen werden kann.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

### LISTE DER BEZUGSZEICHEN

- 1: erste Ausführungsform eines Scharnierdämpfers
- 2: Bund zum Umgreifen eines gebogenen Drahts 10, wobei der Bund mindestens eine Aussparung 11 aufweist
- 3: Ausnehmung zur Aufnahme einer Stange
- 4: Spalt zum Aufweiten des Scharnierdämpfers
- 5: Stange, die in der Ausnehmung 3 aufgenommen wird
- 6: zweite Ausführungsform eines Scharnierdämpfers
- 7: dritte Ausführungsform eines Scharnierdämpfers
- 8: Ausnehmung zur Aufnahme eines gebogenen Drahts
- 9: Rastnase zum Halten des gebogenen Drahts in der Ausnehmung 8 und zum Vorzentrieren
- 10: gebogener Draht
- 11: Aussparung, um das Einführen einer Stange in die Ausnehmung 3 zu erleichtern
- 12: Bund zum Umgreifen eines gebogenen Drahts 10, wobei der Bund keine Aussparung 11 aufweist und daher entlang seines Umfangs durchgängig ausgebildet ist

## Patentansprüche

1. Vorrichtung (1, 6, 7) zum Verbinden eines gebogenen Drahts (10) mit einer Stange (5) an einem Einkaufswagen, wodurch eine Klappvorrichtung, insbesondere eine Korbklappe oder ein Kindersitz, die an dem gebogenen Draht (10) angeordnet ist, klappbar an dem Einkaufswagen angeordnet wird, umfassend:
einen Bund (1, 12) zur Aufnahme des gebogenen Drahts (10) und
eine Ausnehmung (3) zur Aufnahme der Stange (5), wodurch die Vorrichtung (1, 6, 7) verschwenkbar um die Stange (5) ausgebildet ist, wobei die Vorrichtung (1, 6, 7) geeignet ist, auf die Stange (5) eingeclipst zu werden,
**dadurch gekennzeichnet, dass** durch Bewegen der Vorrichtung (1, 6, 7) entlang der Achse der Stange (5) hin zu dem gebogenen Draht (10) die Vorrichtung (1, 6, 7) zwischen dem gebogenen Draht (10) und der Stange (5) anordenbar ist, um eine Funktion als Scharnier zwischen dem gebogenen Draht (10) und der Stange (5) auszuüben.

2. Vorrichtung (1, 6, 7) nach Anspruch 1, wobei die Vorrichtung (1, 6, 7) aus einem Kunststoff, insbesondere Polypropylen (PP), Polyamid (PA) oder PE (Polyethylen) besteht.

3. Vorrichtung (1, 6, 7) nach einem der Ansprüche 1 oder 2, wobei der Bund (1) eine Aussparung (11) aufweist oder wobei der Bund (12) geschlossen entlang seines radialen Umfangs ausgebildet ist.

4. Vorrichtung (1, 6, 7) nach einem der vorhergehenden Ansprüche, wobei die Vorrichtung eine Rastnase (9) zum Zurückhalten des aufgenommenen gebogenen Drahts (10) aufweist.

5. Vorrichtung (1, 6, 7) nach einem der vorhergehenden Ansprüche, wobei die Vorrichtung (1, 6, 7) einen Spalt (4) zur Ausnehmung (3) aufweist.

6. Vorrichtung (1, 6, 7) nach einem der vorhergehenden Ansprüche, wobei der Bund (1, 12) den gebogenen Draht (10) zumindest teilweise umgreift.

7. Verfahren zum Befestigen einer Klappvorrichtung, insbesondere einer Korbklappe oder eines Kindersitzes, an einem Einkaufswagen, umfassend: einen gebogenen Draht (10) an dem die Klappvorrichtung angeordnet ist, eine Stange (5) des Einkaufswagens, um den die Klappvorrichtung verschwenkt werden kann, und eine Vorrichtung (1, 6, 7) nach einem der vorgehenden Ansprüche, umfassend die Schritte:
loses Einhängen des gebogenen Drahts (10) in die Stange (5),
Einclipsen der Vorrichtung (1, 6, 7) auf die Stange (5) und
Verfahren der Vorrichtung (1, 6, 7) entlang der Stange (5) bis die Vorrichtung (1, 6, 7) zwischen dem gebogenen Draht (10) und der Stange (5) angeordnet ist.

8. System zum Verbinden eines gebogenen Drahts (10) mit einer Stange (5) eines Einkaufswagens, wodurch eine Klappvorrichtung, insbesondere eine Korbklappe oder ein Kindersitz, an dem Einkaufswagen klappbar angeordnet werden kann, umfassend:
den gebogenen Draht (10), an dem die Klappvorrichtung angeordnet ist, und
die Stange (5), um die die Klappvorrichtung verschwenkbar ausgebildet ist, wobei zwischen dem gebogenen Draht (10) und der Stange (5) eine Vorrichtung nach einem der Ansprüche 1 bis 6 angeordnet ist.

9. Einkaufswagen zur Verwendung in einem Einkaufsladen oder Supermarkt umfassend eine Vorrichtung nach einem der Ansprüche 1 bis 6 oder ein System nach Anspruch 8.

## Claims

1. Device (1, 6, 7) for connecting a bent wire (10) to a rod (5) on a shopping trolley, enabling a folding device, in particular a basket flap or a child seat arranged on the bent wire (10), to be foldably arranged on the shopping trolley, comprising:
a collar (1, 12) for receiving the bent wire (10) and
a recess (3) for receiving the rod (5), as a result of which the device (1, 6, 7) is designed to be pivotable about the rod (5), wherein the device (1, 6, 7) is suitable to be clipped onto the rod (5),
**characterised in that** by moving the device (1, 6, 7) along the axis of the rod (5) towards the bent wire (10), the device (1, 6, 7) can be arranged between the bent wire (10) and the rod (5) to perform the function of a hinge between the bent wire (10) and the rod (5).

2. Device (1, 6, 7) according to Claim 1, wherein the device (1, 6, 7) is made of a plastics material, in particular polypropylene (PP), polyamide (PA) or polyethylene (PE).

3. Device (1, 6, 7) according to any one of Claims 1 or 2, wherein the collar (1) has a cut-out (11) or wherein the collar (12) is closed along its radial circumference.

4. Device (1, 6, 7) according to any one of the preceding claims, wherein the device has a locking tab (9) for retaining the bent wire (10) that has been received.

5. Device (1, 6, 7) according to any one of the preceding claims, wherein the device (1, 6, 7) has a gap (4) leading to the recess (3).

6. Device (1, 6, 7) according to any one of the preceding claims, wherein the collar (1, 12) at least partially encloses the bent wire (10).

7. Method for attaching a folding device, in particular a basket flap or a child seat, to a shopping trolley, comprising: a bent wire (10) on which the folding device is arranged, a rod (5) of the shopping trolley around which the folding device can be pivoted and a device (1, 6, 7) according to any one of the preceding claims, comprising the steps:
loosely hanging the bent wire (10) in the rod (5),
clipping the device (1, 6, 7) onto the rod (5) and
sliding the device (1, 6, 7) along the rod (5) until said device (1, 6, 7) is arranged between the bent wire (10) and the rod (5).

8. System for connecting a bent wire (10) to a rod (5) of a shopping trolley, enabling a folding device, in particular a basket flap or a child seat, to be foldably arranged on the shopping trolley, comprising:
the bent wire (10) on which the folding device is arranged and
the rod (5) around which the folding device can pivot, wherein a device according to any of Claims 1 to 6 is arranged between the bent wire (10) and the rod (5).

9. Shopping trolley for use in a shop or supermarket, comprising a device according to any one of Claims 1 to 6 or a system according to Claim 8.

## Revendications

1. Dispositif (1, 6, 7) permettant de relier un fil courbé (10) à une tige (5) sur un chariot de courses, de telle sorte qu'un dispositif rabattable, en particulier un rabat pour panier ou un siège d'enfant, qui est disposé sur le fil courbé (10), soit disposé de manière rabattable sur le chariot de courses, comprenant :
un collier (1, 12) servant à la réception du fil courbé (10) et
un évidement (3) servant à la réception de la tige (5), de telle sorte que le dispositif (1, 6, 7) est réalisé de manière à pouvoir pivoter autour de la tige (5), le dispositif (1, 6, 7) étant approprié à être enclipsé sur la tige (5),
**caractérisé en ce que**, par déplacement du dispositif (1, 6, 7) le long de l'axe de la tige (5) en direction du fil courbé (10), le dispositif (1, 6, 7) peut être disposé entre le fil courbé (10) et la tige (5), afin d'exercer une fonction de charnière entre le fil courbé (10) et la tige (5).

2. Dispositif (1, 6, 7) selon la revendication 1, le dispositif (1, 6, 7) étant constitué d'une matière synthétique, en particulier de polypropylène (PP), de polyamide (PA) ou de PE (polyéthylène).

3. Dispositif (1, 6, 7) selon l'une des revendications 1 ou 2, le collier (1) présentant une cavité (11) ou le collier (12) étant réalisé de manière fermée le long de sa périphérie radiale.

4. Dispositif (1, 6, 7) selon l'une des revendications précédentes, le dispositif présentant un ergot d'encliquetage (9) servant à retenir le fil courbé reçu (10) .

5. Dispositif (1, 6, 7) selon l'une des revendications précédentes, le dispositif (1, 6, 7) présentant une fente (4) vers l'évidement (3).

6. Dispositif (1, 6, 7) selon l'une des revendications précédentes, le collier (1, 12) venant en prise au moins partiellement autour du fil courbé (10).

7. Procédé permettant de fixer un dispositif rabattable, en particulier un rabat pour panier ou un siège d'enfant, sur un chariot de courses, comprenant :
un fil courbé (10) sur lequel le dispositif rabattable est disposé, une tige (5) du chariot de courses, autour de laquelle le dispositif rabattable peut être pivoté, et un dispositif (1, 6, 7) selon l'une des revendications précédentes, comprenant les étapes suivantes :
accrochage lâche du fil courbé (10) dans la tige (5),
enclipsage du dispositif (1, 6, 7) sur la tige (5) et déplacement du dispositif (1, 6, 7) le long de la tige (5) jusqu'à ce que le dispositif (1, 6, 7) soit disposé entre le fil courbé (10) et la tige (5).

8. Système permettant de relier un fil courbé (10) à une tige (5) d'un chariot de courses, de telle sorte qu'un dispositif rabattable, en particulier un rabat pour panier ou un siège d'enfant, puisse être disposé de manière rabattable sur le chariot de courses, comprenant :
le fil courbé (10), sur lequel le dispositif rabattable est disposé, et
la tige (5), autour de laquelle le dispositif rabattable est réalisé de manière pivotante, un dispositif selon l'une des revendications 1 à 6 étant disposé entre le fil courbé (10) et la tige (5).

9. Chariot de courses destiné à l'utilisation dans un magasin ou un supermarché comprenant un dispositif selon l'une des revendications 1 à 6 ou un système selon la revendication 8.
